# EUROPÄISCHE PATENTSCHRIFT

(11) **EP 0 858 402 B1**
(45) Veröffentlichungstag und Bekanntmachung des Hinweises auf die Patenterteilung: **17.04.2002**
(21) Anmeldenummer: 97942885.1
(22) Anmeldetag: 27.08.1997
(51) Int. Cl.: B60J 5/10

(54) **SCHWENK- ODER SCHIEBBARE KLAPPE**
SWIVELLING OR SLIDING BACKBOARD
PORTE PIVOTANTE OU COULISSANTE

(30) Priorität: 04.09.1996 DE 19635873
(43) Veröffentlichungstag der Anmeldung: 19.08.1998
(73) Patentinhaber: Schade GmbH & Co. KG, 58840 Plettenberg (DE)
(72) Erfinder: DANCASIUS, Michael, D-42105 Wuppertal (DE); MINNER, Burkhard, D-50827 Köln/Bickendorf (DE); HUSTER, Holger, D-58840 Plettenberg (DE); TIELKE, Stefan, D-59872 Meschede (DE)
(74) Vertreter: Gossel, Hans K., Dipl.-Ing.
(86) Internationale Anmeldenummer: EP9704673
(87) Internationale Veröffentlichungsnummer: WO9809833

(56) Entgegenhaltungen:
- EP-A- 0 111 457
- EP-A- 0 506 514
- EP-A- 0 695 848
- GB-A- 2 078 628
- US-A- 4 880 267
- PATENT ABSTRACTS OF JAPAN vol. 097, no. 002, 28.Februar 1997 & JP 08 258568 A (TOYOTA AUTO BODY CO LTD), 8.Oktober 1996,
- PATENT ABSTRACTS OF JAPAN vol. 011, no. 330 (M-636), 28.Oktober 1987 & JP 62 113615 A (DAIHATSU MOTOR CO LTD), 25.Mai 1987,

## Beschreibung

Die Erfindung betrifft eine schwenkbare Heckklappe für ein Fahrzeug, mit einer Innen- und einer Außenhaut und mit einer Glasscheibe sowie einer mit einem Schloß versehenen Schloßaufnahme.

Klappen dieser Art dienen dazu, die heckseitige Öffnung der Karosserie eines Kraftfahrzeuges zu verschließen, oder bei einer Ausbildung als schiebbare Klappe seitliche Türöffnungen oder dergleichen der Karosserie zu verschließen. Bei der Ausgestaltung als Heckklappe ist der obere Rand durch zwei Scharniere an der Karosserie angelenkt. Im gegenüberliegenden unteren Bereich ist die Schloßaufnahme mit dem darin eingesetzten Schloß vorgesehen. Die Kontur der Klappe ist von der Gestaltung der Karosserie abhängig.

Bei den bisher bekannten Klappen besteht die Außenund die Innenhaut aus Stahlblech, wobei die Verbindung zwischen diesen durch Schweißungen hergestellt wurden. Falls gewünscht, wird an die Innenseite der Innenhaut zusätzlich noch eine Verkleidung aus einem Kunststoff oder einem textilen Material angesetzt. Die bisher bekannten Klappen sind durchweg freitragende Konstruktionen. Das Gewicht der bislang aus Stahlblechen zusammengesetzten Klappen ist entsprechend hoch.

Die gattungsbildende GB-A-2 078 628 beschreibt eine Heckklappe, bei der der Tragrahmen ein offenes Hohlprofil aüfweist, dessen Hohlräume teilweise ausgeschäumt sind.

Der Erfindung liegt die Aufgabe zugrunde, eine Heckklappe der eingangs beschriebenen Art so zu gestalten, daß unter Beibehaltung einer hohen Eigenstabilität das Gewicht der Klappe dennoch erheblich reduziert wird.

Diese Aufgabe wird nach dem Erfindungsvorschlag durch die Kombination der Merkmale des Anspruchs 1 gelöst. Dabei umfaßt die Klappe einen Tragrahmen aus einem offenen oder geschlossenen Hohlprofil, wobei die Außen- und die Innenhaut aus einem Kunststoff und/oder einem Leichtmetall bestehen und am Tragrahmen befestigt sind, und wobei zumindest Eckbereiche der Glasscheibe sowie die Schloßaufnahme an dem Tragrahmen festgelegt sind.

Der Vorschlag nach der Erfindung ermöglicht es, die Klappe in Leichtbauweise herzustellen, wobei der aus einem Hohlprofil hergestellte Tragrahmen praktisch das einzige tragende, die Belastungen aufnehmende Teil ist. Die Außen- und die Innenhaut können dadurch aus Materialien mit gegenüber Stahl deutlich geringerer Wichte gefertigt werden. So bestehen sowohl die Außenund die Innenhaut aus Kunststoff oder einer Haut aus Kunststoff und die andere aus Leichtmetall, beispielsweise Aluminium, oder es können beide Häute aus Leichtmetall gefertigt werden. Die Verbindung des Tragrahmens mit der Außen- und der Innenhaut kann dabei beispielsweise durch Klebung erfolgen. Sie ist davon anhängig, aus welchen Materialien die Außen- und die Innenhaut gefertigt werden. Da zumindest bestimmte Eckbereiche des Tragrahmens mit der Glasscheibe verbunden sind, wirkt auch diese in bezug auf den Gesamtaufbau stabilisierend. Da beim Versuch eines gewaltsamen Öffnens der Klappe die Schloßaufnahme zerstört werden muß, diese jedoch am Tragrahmen festgelegt ist, müssen hohe Kräfte aufgebracht werden, so daß eine hohe Sicherheit erreicht wird. Obwohl es für die üblicherweise aufzunehmenden Belastungen ausreichend ist, wenn der Tragrahmen aus einem Hohlprofil gefertigt ist, ist es vorteilhaft, ein geschlossenes Hohlprofil zu verwenden, weil die Belastbarkeit trotz des nur unwesentlich höheren Gewichtes wesentlich höher ist.

In weiterer Ausgestaltung des Erfindungsgegenstandes ist vorgesehen, den Tragrahmen aus einem aus Stahl bestehenden Hohlprofil zu fertigen, um sich die technologischen vorteile von Stahl, wie eine erhöhte Verwindungssteifigkeit und höhere Belastbarkeit zunutze zu machen.

Bevorzugt wird die Heckklappe durch Scharniere an der Karosserie des Fahrzeugaufbaues angeschlagen, wobei sich die Scharniere dann zweckmäßig am oberen Rand befinden. Es ist dann vorteilhaft, wenn die beidseitig der Schloßaufnahme angeordneten Holme unter einem stumpfen Winkel zueinanderstehen. Da bei Fahrzeugen, insbesondere bei Personenkraftwagen die Forderung besteht, daß die Ladekante möglichst tief liegt und die Öffnung möglichst breit ist, ist weiterhin vorgesehen, daß der unterhalb der Scheibe liegende, der Schloßaufnahme zugeordnete Bereich der Außenhaut und gegebenenfalls auch der Innenhaut rechteckförmig ausgebildet sind, so daß die äußeren Eckbereiche gegenüber den Holmen des Tragrahmens nach außen vorstehen.

Da der Tragrahmen beziehungsweise das Hohlprofil im Querschnitt so gestaltet sind, daß die Außenflächen glattflächig und falzfrei sind, ist vorgesehen, daß die Scheibe zumindest im Bereich der angrenzenden, ein U beschreibenden Holme durch eine Klebenaht am Tragrahmen befestigt ist. Durch einen geeigneten Kleber wird gleichzeitig eine gute Dichtheit erreicht, so daß auf eine separate Dichtung verzichtet werden kann. Damit die Außen- und die Innenhaut auch außerhalb des Tragrahmens ausreichend stabil sind, ist vorgesehen, daß sie Verstärkungsrippen aufweisen. Damit ein stabiler und optisch gut ausgelegter Übergang vom oberen Rand der Heckklappe zum angrenzenden Aufbau möglich ist, ist vorgesehen, daß die Klappe ein der Schloßaufnahme gegenüberliegendes, als Hohlkörper ausgebildetes Oberteil aufweist, das mit dem zugeordneten Bereich des Tragrahmens vorzugsweise lösbar mittels Schrauben verbunden ist. Zweckmäßig ist die Innenhaut im unteren, unterhalb der Glasscheibe liegenden Bereich durch eine obere und untere Profilschiene gebildet, die jeweils innenseitig an der Außenhaut festgelegt sind.

Weitere bevorzugte und wichtige Merkmale der Erfindung sowie vorteilhafte Ausgestaltungen des Erfindungsgegenstandes ergeben sich aus den weiteren Unteransprüchen und aus der nachfolgenden Beschreibung eines besonderen Ausführungsbeispieles in Verbindung mit der Zeichnung.

In der Zeichnung zeigen:
- **Fig. 1:**: eine als Heckklappe ausgebildete Klappe in einer perspektivischen Darstellung mit Blick auf die Außenseite und
- **Fig. 2 bis 6:**: die Klappe in Teilschnitten entsprechend den Schnittangaben in der Fig. 1.

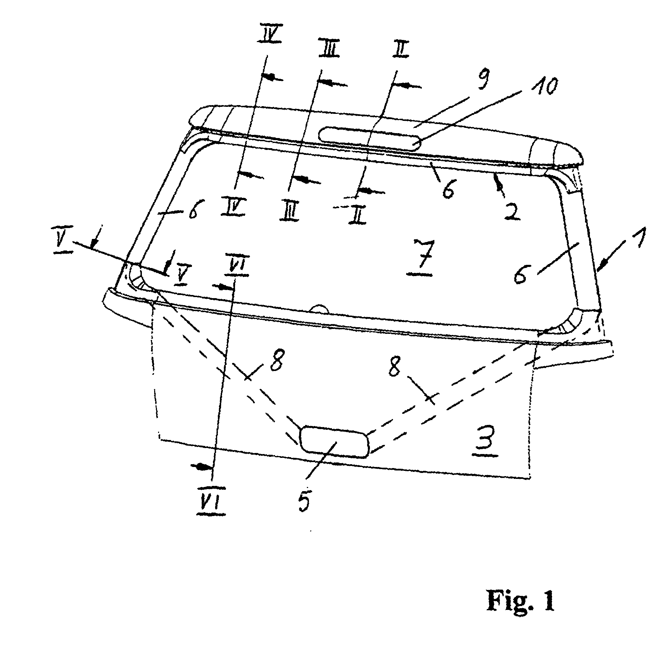

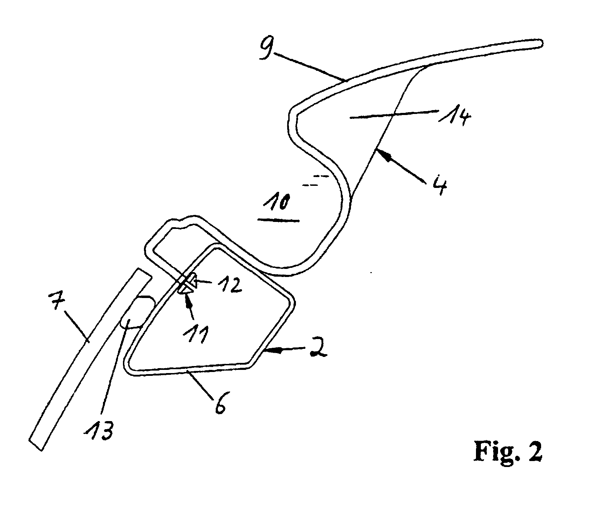

Die in der Fig. 1 dargestellte Klappe 1 besteht im wesentlichen aus einem geschlossenen Tragrahmen 2, der aus einem geschlossenen Hohlprofil aus Stahl gefertigt ist und zwischen der Außenhaut 3 und der Innenhaut 4 liegt. Die Heckklappe 1 ist durch zwei am oberen Rand angeschlagene, nicht dargestellte Scharniere am nicht dargestellten Aufbau des Fahrzeuges angelenkt. Am gegenüberliegenden unteren Rand ist mittig eine am Tragrahmen 2 in ebenfalls nicht näher erläuterter Weise eine Schloßaufnahme 5 angeordnet, in die ein nicht dargestelltes Schloß eingesetzt ist. Der obere Bereich des Tragrahmens 2 ist U-förmig geformt, so daß die drei Holme 6 ein Feld zur Aufnahme einer Glasscheibe 7 begrenzen. Der angrenzende untere Bereich des Tragrahmens 2 ist v-förmig gestaltet, so daß die beiden in der Schloßaufnahme 5 zusammengeführten Holme 8 unter einem stumpfen Winkel zueinanderstehen. Die Außenhaut 3 und die Innenhaut 4 sind in diesem Bereich rechteckförmig gestaltet, so daß die Randbereiche gegenüber dem Tragrahmen nach außen vorstehen. Aus den Figuren ergibt sich, daß sich die Außen- und die Innenhaut 3, 4 im wesentlichen über den unteren Bereich erstrekken. Die Figuren 1 bis 4 zeigen, daß an dem oberen, etwa horizontal verlaufenden Holm 6 des Tragrahmens 2 ein Oberteil 9 in Form einer Profilschiene festgelegt ist, welches zu der der Glasscheibe 7 abgewandten Seite zeigt. Die Figuren 1 und 2 zeigen, daß das Oberteil 9 mit einer mittigen Aufnahmekammer 10 für eine hochgesetzte Schlußleuchte versehen ist. Es ergibt sich aus der Figur 1 weiterhin, daß es ausreichend ist, wenn die Glasscheibe 7 in ihren Eckbereichen mit dem Tragrahmen 2 verbunden ist.

Die Figur 2 zeigt, daß die Innenhaut 4 im Bereich des Oberteiles 9 durch die freien Kanten der innenseitig an der Außenhaut angeformten verstärkungsrippen 14 gebildet ist. Außerdem ist aus der Figur 2 ersichtlich, daß das Oberteil 9 zur Verbindung mit dem Holm 6 des Tragrahmens 2 zwei entsprechende, federnde Rastzungen 11, 12 aufweist. Die Figuren 2 bis 6 zeigen darüber hinaus, daß die Holme 6, 8 des Rahmens 2 einen unsymmetrischen, trapezfärmigen geschlossenen Querschnitt aufweisen. Außerdem geht aus der Zeichnung hervor, daß die Scheibe 7 an den den oberen Bereich der Heckklappe 1 begrenzenden Holmen 6 des Tragrahmens 2, die ein U beschreiben, durch eine umlaufende Klebenaht 13 festgelegt ist. In den Figuren 2 bis 4 sind am Oberteil 9 Verstärkungsrippen 14 vorgesehen, um im dargestellten Ausführungsbeispiel das Oberteil 9 zu stabilisieren.

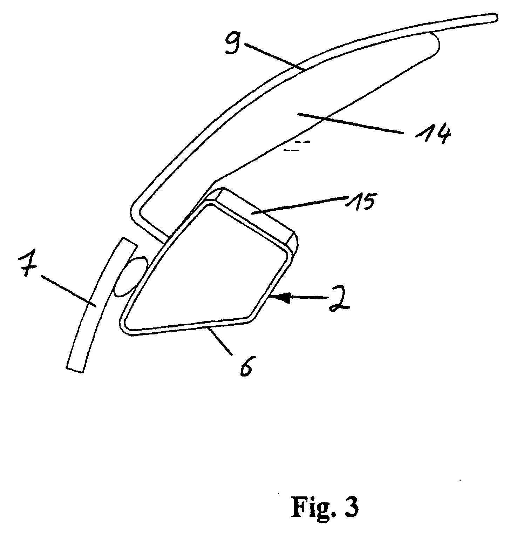

Ein Vergleich der Figuren 2 und 3 zeigt, daß beidseitig neben der Aufnahmekammer 10 Scharniere 15 vorgesehen sind, wobei zum Anschlagen der Heckklappe 1 an den Rand des Fahrzeugaufbaues ein Scharnierteil am Tragrahmen 2 und das andere Scharnierteil am Aufbau befestigt ist. Die Figur 3 zeigt, daß im Scharnierbereich der freie Rand der verstärkungsrippen 14 zurückspringt.

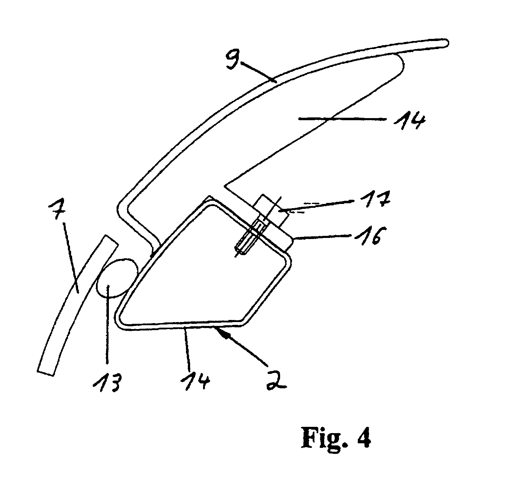

Die Figur 4 zeigt, daß in den Randbereichen die an das Oberteil 9 angeformten Verstärkungsrippen 14 einen an dem Holm 6 des Tragrahmens 2 anliegenden Befestigungsflansch 16 aufweisen, um das Oberteil 9 durch Schrauben 17 mit dem Tragrahmen 2 zu verbinden.

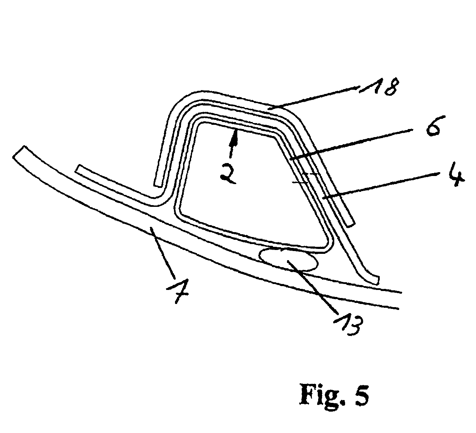

Die Figur 5 zeigt, daß im unteren Eckbereich der Scheibe 7 die Abdichtung zwischen der Scheibe 7 und der Innenhaut 4 ohne Dichtung erfolgt, während im darüberliegenden Bereich der Glasscheibe 7 eine innenliegende Profildichtung 18 den Holm 6 des Tragrahmens 2 übergreift.

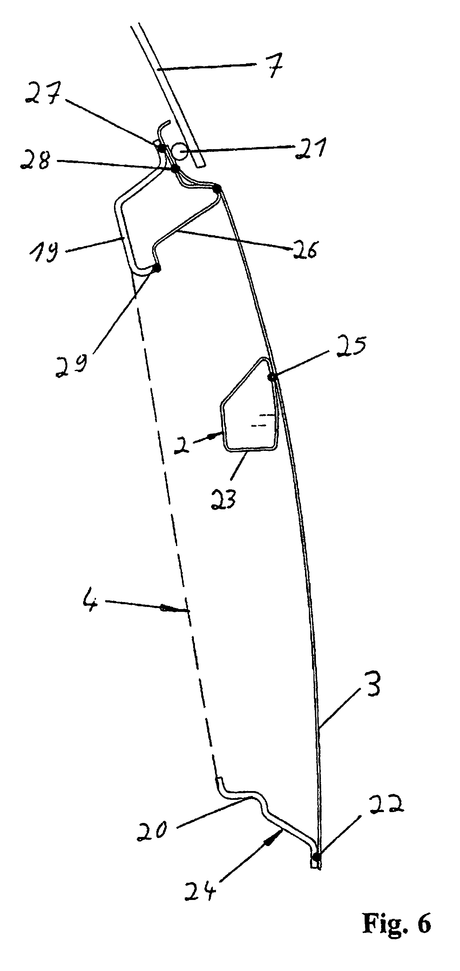

Die Figur 6 zeigt, daß die Innenhaut 4 im Bereich der schrägstehenden Holme des Tragrahmens 2 durch eine obere Profilschiene 19 und eine untere Profilschiene 20 gebildet ist, die mit der Außenhaut 3 durch Klebenähte 21, 22 verbunden sind. Der Holm 23 des Tragrahmens 2 liegt etwa mittig zwischen der oberen und unteren Profilschiene 19, 20. Die nicht näher dargestellte Schloßaufnahme ist durch entsprechend ausgelegte Halteelemente an dem Tragrahmen 2 festgelegt. Die untere Profilschiene 20 weist einen schrägstehenden, ansteigenden Schenkel auf, damit eine Dichtfläche 24 gebildet wird. Der Holm 23 des Tragrahmens 2 ist durch eine Klebenaht 25 mit der Außenhaut 3 verbunden. Außerdem zeigt die Figur 6, daß zwischen der oberen Profilschiene 20 und dem zugeordneten Rand der Außenhaut eine Aggregatträgerschiene 26 angeordnet ist, die durch drei Klebenähte 27, 28, 29 festgelegt ist.

Die Figuren zeigen, daß die Innenhaut 4 im wesentlichen durch die Profilschiene 19, 20 sowie durch die freien Kanten der verstärkungsrippen 14 der Außenhaut 3 gebildet sind.

### Bezugszeichenliste

- 1.: Heckklappe
- 2.: Tragrahmen
- 3.: Außenhaut
- 4.: Innenhaut
- 5.: Schloßaufnahme
- 6.: Holm
- 7.: Glasscheibe
- 8.: Holm
- 9.: Oberteil
- 10.: Aufnahmekammer
- 11.: Rastzunge
- 12.: Rastzunge
- 13.: Klebenaht
- 14.: verstärkungsrippe
- 15.: Scharnier
- 16.: Befestigungsflansch
- 17.: Schraube
- 18.: Profildichtung
- 19.: obere Profilschiene
- 20.: untere Profilschiene
- 21.: Klebenaht
- 22.: Klebenaht
- 23.: Holm
- 24.: Dichtfläche
- 25.: Klebenaht
- 26.: Aggregatträgerschiene
- 27., 28., 29.: Klebenaht

## Patentansprüche

1. Schwenkbare Heckklappe (1) für ein Fahrzeug mit einer Innen- (4) und einer Außenhaut (3) und mit einer Glasscheibe (7) sowie mit einer Schloßaufnahme (5) zur Befertigung eines Schlosses, wobei
die Heckklappe (1) einen aus Holmen (6, 8) zusammen geschlossenen Tragrahmen (2) aus einem Hohlprofil umfaßt, wobei
die Außen- und Innenhaut (3, 4) aus einem Kunststoff und/oder einem Leichtmetall bestehen und jeweils außen bzw. innen am Tragrahmen (2) befestigt sind, wobei zumindest Eckbereiche der Glasscheibe (7) sowie die Schloßaufnahme (5) an dem Tragrahmen (2) festgelegt sind und wobei
die drei oberen Holme (6) des Tragrahmens (2) im Bereich der Scheibe (7) U-förmig verlaufen, **dadurch gekennzeichnet, daß** die beiden in der Schloßaufnahme (5) zusammen geführten, unteren Holme (8) in einem Winkel zueinander stehen.

2. Klappe nach Anspruch 1, **dadurch gekennzeichnet, daß** der Tragrahmen (2) aus einem aus Stahl bestehenden offenen oder geschlossenen Hohlprofil gebildet ist.

3. Klappe nach Anspruch 1, **dadurch gekennzeichnet, daß** sie durch Scharniere an der Karosserie des Fahrzeuges schwenkbar festlegbar ist.

4. Klappe nach Anspruch 3, **dadurch gekennzeichnet, daß** der unterhalb der Scheibe (7) liegende, der Schloßaufnahme (5) zugeordnete Bereich der Außenhaut (3) und gegebenenfalls auch der Innenhaut (4) rechteckförmig ausgebildet sind, so daß die äußeren Eckbereiche gegenüber den Holmen (6) des Tragrahmens (2) nach außen vorstehen.

5. Klappe nach Anspruch 1, **dadurch gekennzeichnet, daß** die Glasscheibe (7) zumindest im Bereich der angrenzenden, ein U beschreibenden Holme (6) des Tragrahmens (2) durch eine Klebenaht (13) am Tragrahmen (2) befestigt ist.

6. Klappe nach Anspruch 1, **dadurch gekennzeichnet, daß** die Außen- und/oder die Innenhaut (3, 4) Verstärkungsrippen (14) aufweist.

7. Klappe nach Anspruch 1, **dadurch gekennzeichnet, daß** sie ein der Schloßaufnahme (5) gegenüberliegendes Oberteil (9) aufweist, das mit dem zugeordneten Bereich des Tragrahmens (2), vorzugsweise lösbar mittels Schrauben (17), verbunden ist.

8. Klappe nach Anspruch 1, **dadurch gekennzeichnet, daß** die Innenhaut (4) des durch die schrägstehenden Holme (8) des Tragrahmens (2) definierten unteren Bereiches der Heckklappe (1) durch eine obere und untere Profilschiene (19, 20) gebildet ist, die jeweils innenseitig an der Außenhaut (3) festgelegt sind.

9. Klappe nach Anspruch 8, **dadurch gekennzeichnet, daß** die untere Profilschiene (20) zur Bildung einer Dichtfläche (24) einen ansteigenden Schenkel aufweist.

10. Klappe nach Anspruch 8, **dadurch gekennzeichnet, daß** zwischen der oberen Profilschiene (19) und dem zugehörigen Rand der Außenhaut (3) eine Aggregatträgerschiene (26) festgelegt ist.

11. Klappe nach einem oder mehreren der vorhergehenden Ansprüche, **dadurch gekennzeichnet, daß** das Oberteil (9) mit mindestens einer, vorzugsweise mittigen, Aufnahmekammer (10) für eine Schlußleuchte versehen ist.

12. Klappe nach einem oder mehreren der vorhergehenden Ansprüche, **dadurch gekennzeichnet, daß** das Oberteil (9) zumindest im Bereich der Aufnahmekammer (10) zur Verbindung mit dem zugehörigen oberen Holm (6) des Tragrahmens (2) Rastzungen (11, 12) aufweist.

13. Klappe nach einem oder mehreren der vorhergehenden Ansprüche, **dadurch gekennzeichnet, daß** der Querschnitt des Tragrahmens (2) über alle Bereiche gleichbleibend sowie asymmetrisch und trapezförmig ist.

14. Klappe nach einem oder mehreren der vorhergehenden Ansprüche, **dadurch gekennzeichnet, daß** die Glasscheibe (7) an den den oberen Bereich der Heckklappe (1) begrenzenden Holmen (6) des Tragrahmens (2) mittels einer umlaufenden Klebenaht (13) festgelegt ist.

15. Klappe nach einem oder mehreren der vorhergehenden Ansprüche, **dadurch gekennzeichnet, daß** beidseitig der Aufnahmekammer (10) Scharniere (15) zur gelenkigen Verbindung der Heckklappe (1) mit dem Rand des Fahrzeugaufbaues vorgesehen sind, wobei ein Scharnierteil am Holm (6) des Tragrahmens (2) und das andere Scharnierteil am Rand des Fahrzeugaufbaues festgelegt ist.

16. Klappe nach einem oder mehreren der vorhergehenden Ansprüche, **dadurch gekennzeichnet, daß** die die Innenhaut (3) bildenden Verstärkungsrippen (14) des Oberteiles (9) in den Randbereichen an dem Holm (6) des Tragrahmens (2) anliegende Befestigungsflansche (16) aufweisen, die mittels Schrauben (17) mit dem Holm (6) verbunden sind.

17. Klappe nach einem oder mehreren der vorhergehenden Ansprüche, **dadurch gekennzeichnet, daß** oberhalb der unteren Eckbereiche der Glasscheibe (7) die Holme (6) des Tragrahmens (2) zur Abdichtung der Glasscheibe (7) gegenüber dem Tragrahmen (2) durch eine Profildichtung (18) umgriffen sind, und daß der untere Rand der Glasscheibe (7) durch den Rand der Innenhaut (4) abgedichtet ist.

## Claims

1. Pivotable rear flap (1) for a vehicle, having an inner skin (4) and an outer skin (3) and a window (7) and a lock socket (5) for the fastening of a lock, the rear flap (1) comprising a supporting frame (2) which consists of a hollow profile and is made up of struts (6, 8), the outer skin and inner skin (3, 4) consisting of a plastic and/or of a light metal and being respectively fastened on the outside or inside of the supporting frame (2), at least corner regions of the window (7) and the lock socket (5) being fixed on the supporting frame (2), and the three upper struts (6) of the supporting frame (2) having a U-shaped profile in the region of the window (7), **characterized in that** the two lower struts (8) which are brought together in the lock socket (5) are at an angle to each other.

2. Flap according to Claim 1, **characterized in that** the supporting frame (2) is formed from an open or closed hollow profile consisting of steel.

3. Flap according to Claim 1, **characterized in that** it can be fixed pivotably on the bodywork of the vehicle by means of hinges.

4. Flap according to Claim 3, **characterized in that** that region of the outer skin (3) which lies below the window (7) and is assigned to the lock socket (5) and, if appropriate, also the inner skin (4) are of rectangular design, with the result that the outer corner regions protrude outwards with respect to the struts (6) of the supporting frame (2).

5. Flap according to Claim 1, **characterized in that** the window (7) is fastened to the supporting frame (2), at least in the region of the adjacent struts (6) of the supporting frame (2), which struts describe a U, by means of an adhesive seam (13).

6. Flap according to Claim 1, **characterized in that** the outer skin and/or the inner skin (3, 4) have reinforcing ribs (14).

7. Flap according to Claim 1, **characterized in that** it has an upper part (9) which lies opposite the lock socket (5) and is connected to the associated region of the supporting frame (2), preferably in a releasable manner by means of screws (17).

8. Flap according to Claim 1, **characterized in that** the inner skin (4) of that lower region of the rear flap (1) which is defined by the obliquely positioned struts (8) of the supporting frame (2) is formed by an upper and lower profiled rail (19, 20) which are each fixed on the inside of the outer skin (3).

9. Flap according to Claim 8, **characterized in that** the lower profiled rail (20) has, in order to form a sealing surface (24), an ascending limb.

10. Flap according to Claim 8, **characterized in that** an assembly support rail (26) is fastened between the upper profiled rail (19) and the associated edge of the outer skin (3).

11. Flap according to one or more of the preceding claims, **characterized in that** the upper part (9) is provided with at least one, preferably central, socket chamber (10) for a lock light.

12. Flap according to one or more of the preceding claims, **characterized in that** the upper part (9) has latching tongues (11, 12) at least in the region of the socket chamber (10) for the connection to the associated, upper strut (6) of the supporting frame (2).

13. Flap according to one or more of the preceding claims, **characterized in that** the cross section of the supporting frame (2) is constant and also asymmetrical and trapezoidal across all of the regions.

14. Flap according to one or more of the preceding claims, **characterized in that** the window (7) is fixed on those struts (6) of the supporting frame (2) which bound the upper region of the rear flap (1), by means of a peripheral adhesive seam (13).

15. Flap according to one or more of the preceding claims, **characterized in that** hinges (15) are provided on both sides of the socket chamber (10) for the articulated connection of the rear flap (1) to the edge of the vehicle body, one hinge part being fixed on the strut (6) of the supporting frame (2) and the other hinge part being fixed on the edge of the vehicle body.

16. Flap according to one or more of the preceding claims, **characterized in that** the reinforcing ribs (14) of the upper part (9), which ribs form the inner skin (3), have, in the edge regions, fastening flanges (16) which bear against the strut (6) of the supporting frame (2) and are connected to the strut (6) by means of screws (17).

17. Flap according to one or more of the preceding claims, **characterized in that** above the lower corner regions of the window (7) the struts (6) of the supporting frame (2) have a profiled seal (18) fitted around them for the purpose of sealing off the window (7) from the supporting frame (2), and **in that** the lower edge of the window (7) is sealed by the edge of the inner skin (4).

## Revendications

1. Hayon pivotant (1) pour un véhicule avec des peaux intérieure (4) et extérieure (3) et avec une vitre (7) et avec un logement de serrure (5) pour la fixation d'une serrure, où le hayon (1) comprend un châssis de support (2) fermé par des longerons (6, 8) en un profilé creux, où les peaux extérieure et intérieure (3, 4) sont constituées d'un matériau synthétique et/ou d'un métal léger et sont fixées chacune à l'extérieur respectivement à l'intérieur au châssis de support (2), où au moins des zones angulaires de la vitre (7) ainsi que le logement de serrure (5) sont fixés au châssis de support (2) et où les trois longerons supérieurs (6) du châssis de support (2) s'étendent au voisinage de la vitre (7) en forme de U, **caractérisé en ce que** les deux longerons inférieurs (8) réunis dans le logement de serrure (5) s'étendent selon un angle l'un à l'autre.

2. Hayon selon la revendication 1, **caractérisé en ce que** le châssis de support (2) est constitué d'un profilé creux ouvert ou fermé en acier.

3. Hayon selon la revendication 1, **caractérisé en ce qu'**il peut être fixé d'une manière pivotante par des charnières à la carrosserie du véhicule.

4. Hayon selon la revendication 3, **caractérisé en ce que** la zone de la peau extérieure (3) située en dessous de la vitre (7), associée au logement de serrure (5) et, le cas échéant, également de la peau intérieure (4) sont réalisées en une forme rectangulaire de telle sorte que les zones de coin extérieures font saillie vers l'extérieur par rapport aux longerons (6) du châssis de support (2).

5. Hayon selon la revendication 1, **caractérisé en ce que** la vitre (7) est fixée au moins au voisinage des longerons avoisinants (6), décrivant un U, du châssis de support (2) par un cordon de colle (13) au châssis de support (2).

6. Hayon selon la revendication 1, **caractérisé en ce que** la peau extérieure et/ou la peau intérieure (3, 4) présentent des nervures de renforcement (14).

7. Hayon selon la revendication 1, **caractérisé en ce qu'**il présente une partie supérieure (9) opposée au logement de serrure (5) qui est reliée à la zone associée du châssis de support (2), de préférence amoviblement par des boulons (17).

8. Hayon selon la revendication 1, **caractérisé en ce que** la peau intérieure (4) de la zone inférieure du hayon (1) définie par les longerons en biais (8) du châssis de support (2) est formée par des rails profilés supérieur et inférieur (19, 20) qui sont fixés chacun au côté intérieur à la peau extérieure (3).

9. Hayon selon la revendication 8, **caractérisé en ce que** le rail profilé inférieur (20) pour former une face d'étanchéité (24), présente une branche montante.

10. Hayon selon la revendication 8, **caractérisé en ce qu'**il est fixé entre le rail profilé supérieur (19) et le bord associé de la peau extérieure (3) un rail de support d'agrégat (26).

11. Hayon selon l'une ou plusieurs des revendications précédentes, **caractérisé en ce que** la partie supérieure (9) est pourvue d'au moins une chambre de réception (10), de préférence médiane, pour un feu arrière.

12. Hayon selon l'une ou plusieurs des revendications précédentes, **caractérisé en ce que** la partie supérieure (9), au moins au voisinage de la chambre de réception (10), présente des languettes d'enclenchement (11, 12) pour l'assemblage avec le longeron supérieur associé (6) du châssis de support (2).

13. Hayon selon l'une ou plusieurs des revendications précédentes, **caractérisé en ce que** la section transversale du châssis de support (2) est constante sur toutes les zones ainsi qu'asymétrique et en forme de trapèze.

14. Hayon selon l'une ou plusieurs des revendications précédentes, **caractérisé en ce que** la vitre (7) est fixée aux longerons (6) du châssis de support (2) délimitant la zone supérieure du hayon (1) au moyen d'un cordon de colle (13) s'étendant tout autour.

15. Hayon selon l'une ou plusieurs des revendications précédentes, **caractérisé en ce que** sont prévues de part et d'autre de la chambre de réception (10) des charnières (15) pour l'assemblage articulé du hayon (1) avec le bord de la construction de véhicule, où une partie de charnière est fixée au longeron (6) du châssis de support (2) et l'autre partie de charnière au bord de la construction de véhicule.

16. Hayon selon l'une ou plusieurs des revendications précédentes, **caractérisé en ce que** les nervures de renforcement (14) de la partie supérieure (9) formant la peau intérieure (3) présentent dans les zones de bord des brides de fixation (16) s'appliquant au longeron (6) du châssis de support (2) qui sont assemblées par des boulons (17) avec le longeron (6).

17. Hayon selon l'une ou plusieurs des revendications précédentes, **caractérisé en ce que**, au-dessus des zones de coin inférieures de la vitre (7), les longerons (6) du châssis de support (2), pour l'étanchéité de la vitre (7) par rapport au châssis de support (2), sont entourés par une garniture d'étanchéité profilée (18) et **en ce que** le bord inférieur de la vitre (7) est rendu étanche par le bord de la peau intérieure (4).
